# EUROPEAN PATENT SPECIFICATION

(11) **EP 2 140 585 B1**
(45) Date of publication and mention of the grant of the patent: **03.06.2015**
(21) Application number: 07833568.4
(22) Date of filing: 24.10.2007
(51) Int. Cl.: H04B 7/26, H04W 48/20, H04W 60/06

(54) **METHOD FOR MANAGING WIRELESS NETWORK AND WIRELESS DEVICE EMPLOYING THE SAME**
VERFAHREN ZUR VERWALTUNG EINES DRAHTLOSEN NETZWERKS UND DIESES VERWENDENDE DRAHTLOSE EINRICHTUNG
PROCÉDÉ DE GESTION DE RÉSEAU SANS FIL ET DISPOSITIF SANS FIL UTILISANT CE PROCÉDÉ

(30) Priority: 24.04.2007 US 913642 P; 15.06.2007 KR 20070059060
(43) Date of publication of application: 06.01.2010
(73) Proprietor: Samsung Electronics Co., Ltd., Suwon-si, Gyeonggi-do, 443-742 (KR)
(72) Inventor: RYU, Joon-hyuk, Suwon-si Gyeonggi-do 443-727 (KR); SHIM, Seung-seop, Anyang-si Gyeonggi-do 431-070 (KR); HAN, Moon-seok, Suwon-si Gyeonggi-do 443-740 (KR); CHOI, Seung-hyuk, Suwon-si Gyeonggi-do 443-742 (KR)
(74) Representative: Appleyard Lees
(86) International application number: PCT/KR2007/005259
(87) International publication number: WO 2008/130087

(56) References cited:
- EP-A1- 1 708 440
- EP-A2- 1 471 693
- US-A1- 2004 185 876
- US-A1- 2005 135 310
- US-A1- 2006 058 029
- US-A1- 2006 062 391
- US-A1- 2006 094 476
- TREZENTOS D ET AL: "Algorithms for ad-hoc piconet topology initialization", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 5, 6 October 2003 (2003-10-06), pages 3448-3452, XP010701576, DOI: 10.1109/VETECF.2003.1286352 ISBN: 978-0-7803-7954-1
- RUBIN I ET AL: "Topological performance of mobile backbone based wireless ad hoc network with unmanned vehicles", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, vol. 3, 16 March 2003 (2003-03-16), pages 1498-1503, XP010639991, DOI: 10.1109/WCNC.2003.1200608 ISBN: 978-0-7803-7700-4

## Description

### Technical Field

Methods and apparatuses consistent with the present invention relate to managing a wireless network, and more particularly, to managing association and disassociation of wireless devices configuring a wireless network.

### Background Art

The advent of a wireless personal area network (WPAN) enables home networking to be realized within the home, and thus it is expected that the user's convenience and entertainment will increase.

In general, the WPAN is automatically formed by neighbouring WPAN-devices rather than artificially formed by a user. The WPAN has small coverage such that the number of WPAN-devices the WPAN can accept is limited.

If the number of WPAN-devices reaches a certain number limit, the WPAN will not accept another WPAN-device. Accordingly, the WPAN-device which is not accepted by the WPAN should join another WPAN or establish a new WPAN for itself. However, if neither is possible, the WPAN-device is isolated.

US 2006/094476A1, EP 1708440 and EP 1471693 disclose methods of operating wireless networks.

### Disclosure of Invention

### Technical Problem

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method for managing a network by determining a wireless device to be disassociated from a wireless network and disassociating the determined wireless device, and a wireless device employing the same.

### Technical Solution

According to the present invention there is provided an apparatus and method as set forth in the appended claims. Other features of the invention will be apparent from the dependent claims, and the description which follows.

### Advantageous Effects

As described above, it is possible to determine a wireless device to be disassociated from the wireless network and to disassociate the determined wireless device from the wireless network.

Accordingly, since an existing wireless device can be forecedly disassociated from the wireless network, the number of wireless devices configuring the wireless network can be artificially adjusted.

Also, since an existing wireless device is forcedly disassociated from the wireless network and a new wireless device is associated with the wireless network, the configuration of the wireless networks can be changed more reasonably.

### Brief Description of the Drawings

The above and/or other aspects of the present invention will be more apparent by describing certain exemplary embodiments of the present invention with reference to the accompanying drawings, in which:
Fig 1 is a view illustrating a wireless network to which an exemplary embodiment of the present invention is applicable;
Fig 2 is a view illustrating a method for managing a piconet of a piconet coordinator (PNC) according to an exemplary embodiment of the present invention;
Fig 3 is a view illustrating a piconet which has been transformed as a result of disassociating and associating wireless devices from and with the piconet;
Fig 4 is a block diagram illustrating a wireless device according to another exemplary embodiment of the present invention; and
Fig 5 is a flowchart illustrating a method for managing a wireless network according to another exemplary embodiment of the present invention.

### Best Mode for Carrying out the Invention

Certain exemplary embodiments of the present invention will be described in greater detail with reference to the accompanying drawings.

In the following description, the same drawing reference numerals are used for the same elements even in different drawings. The matter defined in the description, such as detailed construction and elements, are provided to assist in a comprehensive understanding of the invention. Thus, it is apparent that the exemplary embodiments of the present invention can be carried out without this specifically defined matter. Also, well-known functions or constructions are not described in detail since they would obscure the invention with unnecessary detail.

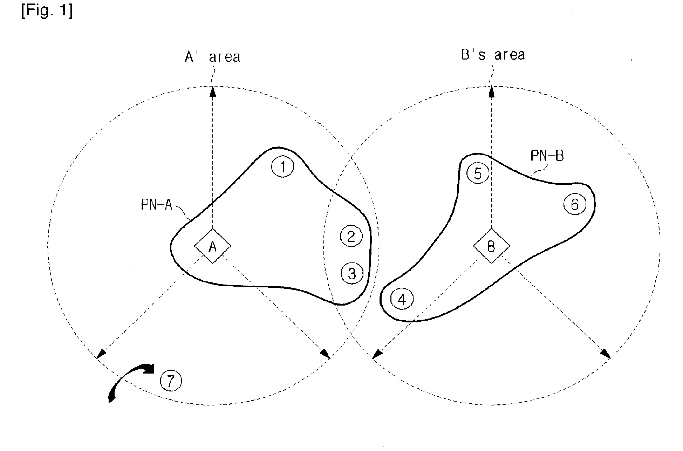

FIG. 1 is a view illustrating a wireless network to which an exemplary embodiment of the present invention is applicable. In FIG. 1, closed curves drawn in a solid line represent piconets. The piconet is a wireless network that is established according to a wireless personal area network (WPAN) scheme.

FIG. 1 shows two piconets, one being a piconet-A (PN-A) centered around a wireless device "A", the other being a piconet-B (PN-B) centered around a wireless device "B".

The wireless devices "A" and "B" are piconet coordinators that are adapted to manage piconets. Hereinafter, the wireless devices "A" and "B" are referred to as "PNC "A"" and "PNC "B"", respectively.

The piconet-A (PN-A) is configured by the PNC "A" and wireless devices "1", "2", and "3" which are communicably coupled with one another via wireless connection. The wireless devices "1", "2", and "3" receive beacons broadcast from the PNC "A".

The piconet-B (PN-B) is configured by the PNC "B" and wireless devices "4", "5", and "6" which are communicably coupled with one another via wireless connection. The wireless devices "4", "5", and "6" receive beacons broadcast from the PNC "B".

The wireless devices "2" and "3" receive beacons broadcast from the PNC "B" in addition to the beacons broadcast from the PNC "A". This is because the wireless devices "2" and "3" are located in an area where an area (A'area) reachable by the PNC "A" overlaps an area (B'area) reachable by the PNC "B".

A wireless device "7" also receive beacons broadcast from the PNC "A" because it moves into the area (A'area) reachable by the PNC "A". Upon receiving the beacons, the wireless device "7" may request approval from the PNC "A" for association with the piconet-A (PN-A).

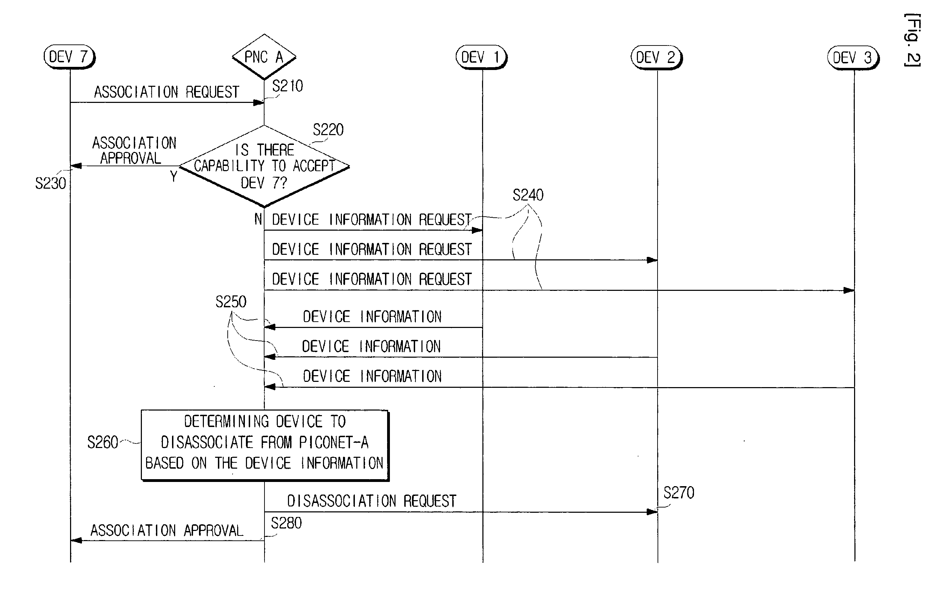

Hereinafter, how the PNC "A" manages the piconet-A (PN-A) when receiving an association request from the wireless device "7" will be described in detail with reference to FIGS. 1 and 2. FIG. 2 is a view illustrating a method for managing the piconet-A (PN-A) of the PNC "A" according to an exemplary embodiment of the present invention.

As shown in FIG. 2, if the PNC "A" receives an 'association request message' from the wireless device "7" at operation S210, the PNC "A" determines if the PNC "A" has a capability to accept the wireless device "7" in the piconet-A (PN-A) at operation S220.

More specifically, at operation S220, the PNC "A" determines if 'the number of wireless devices currently configuring the piconet-A (PN-A)', which is referred to as "current number" hereinafter, is same as 'the number of wireless devices the piconet-A (PN-A) can accept', which is referred to as "acceptable number" hereinafter.

That is, if "current number" is smaller than "acceptable number", the PNC "A" determines that the PNC "A" has a capability to accept the wireless device "7" in the piconet-A (PN-A). For example, if the acceptable number of the piconet-A (PN-A) is '5' and if the current number is '4' as shown in FIG. 1, the PNC "A" determines that the PNC "A" has a capability to accept the wireless device "7" in the piconet-A (PN-A).

Alternatively, at operation S220, the PNC "A" determines if 'the number of wireless devices it currently manages is same as 'the number of wireless devices it can manage', and then determines if the PNC "A" has a capability to accept the wireless device "7" in the piconet-A.

If it is determined that the PNC "A" has a capability to accept the wireless device "7" (S220-Y), the PNC "A" transmits an 'association approval message' to the wireless device "7" at operation S230. Accordingly, the wireless device "7" joins the piconet-A (PN-A) such that the piconet-A (PN-A) is transformed into a piconet where the PNC "A" and the wireless devices "1", "2", "3" and "7" are communicably coupled to one another via wireless connection.

After that, the PNC "A" broadcasts information about the piconet-A (PN-A) which has been transformed by the association of the wireless device "7" over the piconet-A (PN-A). Accordingly, the wireless devices "1", "2", "3", and "7" configuring the piconet-A (PN-A) obtain the information about the transformed piconet-A (PN-A).

If the "current number" is same as the "acceptable number", the PNC "A" determines that the PNC "A" has no capability to accept the wireless device "7". For example, if the acceptable number of the piconet-A (PN-A) is '4' and if the current number is '4' as shown in FIG. 1, the PNC "A" determines that the PNC "A" has no capability to accept the wireless device "7" in the piconet-A (PN-A).

If it is determined that the PNC "A" has no capability to accept the wireless device "7" (S220-N), the PNC "A" transmits an 'device information request message' to the wireless devices "1", "2", and "3" configuring the piconet-A (PN-A) at operation S240. The PNC "A" receives information about the devices from the wireless devices "1", "2", and "3" as a response to the request at operation S250.

Based on the device information from the wireless devices "1", "2", and "3", the PNC "A" determines which device it will disassociate from the piconet-A (PN-A) at operation S260.

Hereinafter, detailed description will be made about the PNC "A" determines the wireless device to be disassociated from the piconet-A (PN-A) based on the device information at operation S260, on the assumption that the device information includes 1) information on whether or not the wireless device can join another piconet, 2) in-formation on the type of data treated by the wireless device, and 3) information on the amount of data transceived by the wireless device.

The PNC "A" selects a wireless device that can join another piconet as a disassociation candidate. A wireless device that can receive beacons from another piconet is regarded as a wireless device that can join another piconet. In other words, if a wireless device is located in an area where the area reachable by the PNC "A" overlaps an area reachable by a PNC of another piconet, the wireless device is regarded as a wireless device that can join another piconet.

As shown in FIG. 1, since the wireless devices "2" and "3" are located in the area where the area (A's area) reachable by the PNC "A" overlaps the area (B's area) reachable by the PNC "B", they can join the piconet-B (PN-B).

The device information transmitted from the wireless devices "2" and "3" to the PNC "A" at operation S250 contains information indicating that they can also join the piconet-B (PN-B). Consequently, the PNC "A" selects the wireless devices "2" and "3" as disassociation candidates.

If the number of disassociation candidates is greater than or equal to '2', the PNC "A" selects one of them as a wireless device to disassociate from the piconet-A (PN-A) based on other device information.

More specifically, the PNC "A" uses the information on the type of data treated by the wireless devices to determine a wireless device to be disassociated from the piconet-A (PN-A). For example, if the data treated by the wireless device "3" is regarded as being more important than the data treated by the wireless device "2", the PNC "A" selects the wireless device "2" to disassociate from the piconet-A (PN-A). This is because the wireless device "3" is given a greater weight on the piconet-A (PN-A) than the wireless device "2".

If the type of data treated by the wireless device "2" is same as that of the wireless device "3", which means they are same in how important they are, the PNC "A" uses the information on the amount of data transceived by the wireless devices to determine a wireless device to disassociate from the piconet-A (PN-A). For example, if the amount of data transceived by the wireless device "3" is larger than that of the wireless device "2", the PNC "A" selects the wireless device "2" to disassociate from the piconet-A (PN-A). This is because that the wireless device "3" is given a greater weight on the piconet-A (PN-A) than the wireless device "2".

As described above, if the wireless device "2" is to be disassociated from the piconet-A (PN-A) at operation S260, the PNC "A" transmits a 'disassociation request message' to the wireless device "2" at operation S270. Then, the PNC "A" transmits an 'association approval message' to the wireless device "7" at operation S280.

The PNC "A" may perform the operation S280 after receiving from the wireless device "2" a 'disassociation approval message' that is a response to the 'disassociation request message' transmitted at operation S270.

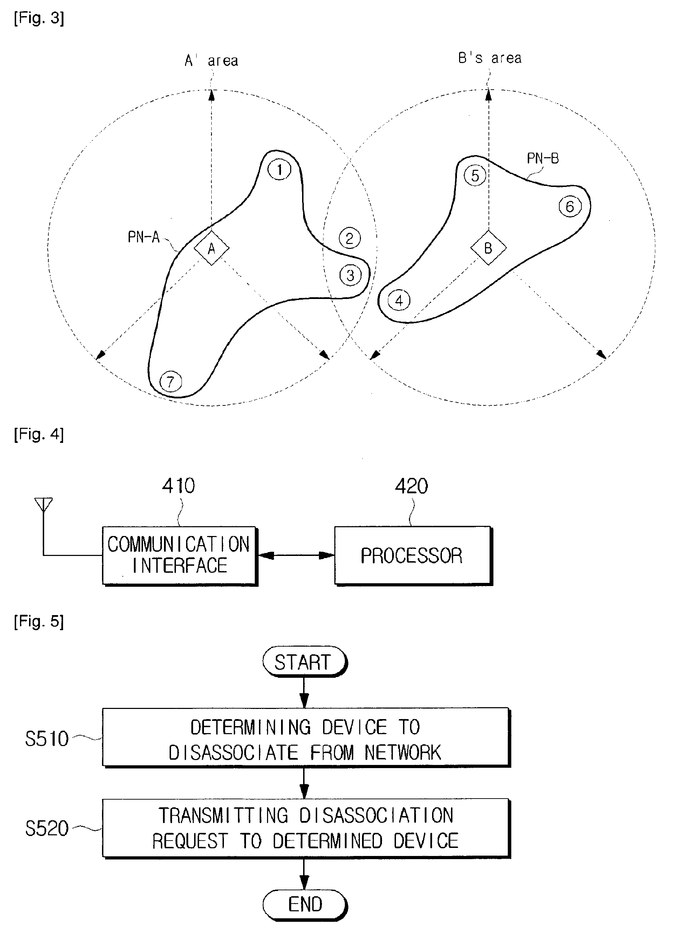

As a result of performing the operations S270 and S280, the wireless device "2" is disassociated from the piconet-A (PN-A) and the wireless device "7" is newly associated with the piconet-A (PN-A), and thus, the piconet-A (PN-A) is transformed into a piconet that is configured by the PNC "A" and wireless devices "1", "3", and "7", in which they are communicably coupled to one another via wireless connection. FIG. 3 shows the transformed piconet-A (PN-A).

After that, the PNC "A" broadcasts information on the piconet-A (PN-A) transformed by the disassociation of the wireless device "2" and the association of the wireless device "7" over the piconet-A (PN-A). Accordingly, the wireless devices "1", "3", and "7" obtain the information on the transformed piconet-A (PN-A).

Up to now, the descriptions were made about the process of the PNC disassociating one of the wireless devices configuring the piconet at the time of a request for approval for association from a wireless device which wishes to join the piconet according to an exemplary embodiment of the present invention.

This embodiment is based on the assumption that there is only one wireless device which wishes to join the piconet. However, this is merely an example for the convenience of explanation and the technical idea of the present invention will be applicable to the case where there are many numbers of wireless devices which wish to join the piconet. In that case, if the sum of 'the number of wireless devices currently configuring the piconet' and 'the number of wireless devices which wish to join the piconet' exceseds 'the number of wireless devices that the piconet can accept', the disassociation of a wireless device is performed.

In this embodiment, a wireless device is determined to be disassociated from the piconet if a wireless device which wishes to join the piconet moves and appears in the reachable range of the PNC of the piconet. However, this is merely an example for the convenience of explanation, and the technical idea will also be applied in different situations.

For example, if a channel used by the piconet is in a bad condition (for example, if a specific wireless device of the piconet is allocated a broad bandwidth), if a load of the PNC adapted to manage the piconet increases, and if a wireless device located in the area reachable by the PNC of the piconet is switched from a power-off state to a power-on state, the technical idea of the present invention will also be applied.

Also, in this embodiment, a wireless device is to be disassociated from the piconet if a wireless device which wishes join the piconet appears. However, in another exemplary embodiment, the PNC may not disassociate a wireless device from the piconet and may refuse to accept a new wireless device which wishes join the piconet. In that case, based on information about the existing wireless device associated with the piconet and information about a new wireless device which wishes to join the piconet, the PNC determines whether to disassociate the existing wireless device or to refuse to accept the new wireless device which wishes to join the piconet.

Also, in this embodiment, the information about the wireless device includes 1) information on whether or not the wireless device can join another piconet, 2) information on the type of data treated by the wireless device, and 3) information on the amount of data transceived by the wireless device. However, this is merely an example for the convenience of explanation. The information about the wireless device may include some of these three types of information, and also may include different types of information.

Examples of the different types of information are information about a transmission power of the wireless device and information about the priority order of the wireless device. The transmission power is a criterion used in measuring a distance within which the wireless device can transmit data. The priority order of the wireless device is another criterion used in determining a wireless device to be disassociated from the piconet. For example, if two wireless devices configuring the piconet should be disassociated from the piconet, the two wireless devices having a low priority order are disassociated from the piconet.

Also, in this embodiment, the information described above is used in the order of 1), 2), and 3) in determining a wireless device to be disassociated from the piconet. However, this is merely an example for the convenience of explanation. An application adopting a different order belongs to the scope of the present invention.

Also, in this embodiment, it is the PNC that determines a wireless device to be disassociated from the piconet, but it may be possible for another wireless device adapted manage the piconet to perform this determination.

Also, a wireless device may be determined to be disassociated from the piconet manually by a user of the PNC, rather than automatically by the PNC.

Also, in this embodiment, a network to which the present invention is applied is a piconet which is a kind of WPAN. However, this is merely an example for the convenience of explanation. The present invention will be applied to a different type of WPAN, and also may be applied to a local personal area network (WLAN).

Please note that any device that has a function of wireless communication can be used as a wireless device, and the wireless device mentioned above includes a PNC. A video device such as a TV, a set-top box, and a personal multimedia player (PMP), a communication device such as a PC and a mobile phone, and other devices known in the art may be used as the wireless devices herein.

Hereinafter, another exemplary embodiment of the present invention will be described in detail with reference to FIGS. 4 and 5.

According to another exemplary embodiment of the present invention, a wireless device comprises a communication interface 410 and a processor 420 as shown in FIG. 4.

The communication interface 410 is communicably coupled with another wireless device configuring a wireless network. The processor 420 determines a wireless device to be disassociated from the wireless network, and transmits a 'disassociation request message' to a wireless device which is to be disassociated from the wireless network through the communication interface 410.

According to a method for managing a network as shown in FIG. 5, the wireless device determines a wireless device to be disassociated from the wireless network among the wireless devices configuring the network at operation S510. Then, the wireless device transmits a "sassociation request message' to the wireless device which is to be disassociated from the wireless network at operation S520.

Network management is possible by the above-described method.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for managing a wireless network, comprising;
among wireless devices configuring the wireless network, determining a first wireless device to be disassociated from the wireless network, based on a response to a determination that the wireless network has no capability to accept a second wireless device having requested association to said wireless network,
wherein determining the first wireless device further comprises transmitting device information request messages to the wireless devices configuring said wireless network;
based on the device information messages received from the wireless devices configuring said wireless network, selecting the first wireless device that can join another wireless network;
transmitting a disassociation request message to the first wireless device which is to be disassociated from the wireless network; and
after disassociating the first wireless device, the association request of the second wireless device is approved and the second wireless device is associated with the wireless network.

2. The method as claimed in claim 1, wherein the device information messages comprise information about a type of data treated by each of the wireless devices, information about an amount of data transceived by each of the wireless devices, information about a transmission power of each of the wireless devices, and information about a priority order of each of the wireless devices.

3. The method as claimed in claim 1, wherein the determining step is performed if the sum of the number of wireless devices currently configuring the wireless network and a number of wireless devices which wish to join the wireless network exceeds the number of wireless devices that the wireless network can accept.

4. The method as claimed in claim 3, wherein if a wireless device which wishes to join the wireless network appears, the sum exceeds the number of wireless devices that the wireless network can accept.

5. The method as claimed in claim 1, wherein the determining step is performed in either case where a channel used by the wireless network is in a bad condition or where a load of a wireless device adapted to manage the wireless network increases.

6. The method as claimed in claim 1, wherein the determining and the transmitting steps are performed by a wireless device adapted to manage the wireless network.

7. The method as claimed in claim 1, wherein the wireless network is either a wireless personal area network, WPAN, or a wireless local area network, WLAN.

8. The method as claimed in claim 1, further comprising:
transmitting an association approval message to the second wireless device which requests approval for association with the wireless network; and
transmitting information about the wireless network which has been transformed as a result of disassociating the first wireless device which is to be disassociated from the wireless network and associating the second wireless device which requests approval for association with the wireless network to the wireless devices configuring the wireless network.

9. A wireless device comprising:
a communication interface (410) which is adapted to be communicably coupled to wireless devices configuring a wireless network; and
a processor (420) which is operable to determine a first wireless device to be disassociated from the wireless network, based on a response to a determination that the wireless network has not capability to accept a second wireless device having requested association to said wireless network, wherein the processor (420) is operable to determine the first wireless device by transmitting device information request messages to the wireless devices configuring said wireless network, and, based on the device information messages received from the wireless devices configuring said wireless network, to select the first wireless device that can join another wireless network; wherein
the processor (420) is operable to transmit a disassociation request message to the first wireless device which is to be disassociated from the wireless network through the communication interface and, after disassociating the first wireless device, is operable to approve the association request of the second wireless device and to associate the second wireless device with the wireless network.

## Patentansprüche

1. Verfahren zur Verwaltung eines drahtlosen Netzwerks, aufweisend:
Bestimmen unter drahtlosen Vorrichtungen, die das drahtlose Netzwerk bilden, einer ersten drahtlosen Vorrichtung, die vom drahtlosen Netz getrennt werden soll, basierend auf einer Reaktion auf eine Bestimmung, dass das drahtlose Netzwerk nicht über die Fähigkeit zum Akzeptieren einer zweiten drahtlosen Vorrichtung mit angeforderter Verbindung zum drahtlosen Netzwerk verfügt,
wobei das Bestimmen der ersten drahtlosen Vorrichtung ferner ein Senden von Nachrichten zur Anforderung von Vorrichtungsinformationen an die drahtlosen Vorrichtungen, die das drahtlose Netzwerk bilden, aufweist;
Auswählen basierend auf den Vorrichtungsinformationsnachrichten, die von den drahtlosen Vorrichtungen empfangen werden, die das drahtlose Netzwerk bilden, der ersten drahtlosen Vorrichtung, die sich an ein anderes drahtloses Netzwerk anschließen kann;
Senden einer Trennungsanforderungsnachricht an die erste drahtlose Vorrichtung, die vom drahtlosen Netzwerk getrennt werden soll; und
wobei die Verbindungsanforderung der zweiten drahtlosen Vorrichtung nach dem Trennen der ersten drahtlosen Vorrichtung zugelassen wird, und die zweite drahtlose Vorrichtung mit dem drahtlosen Netzwerk verbunden wird.

2. Verfahren nach Anspruch 1, wobei die Vorrichtungsinformationsnachrichten Informationen über einen Typ von Daten, die von jeder der drahtlosen Vorrichtungen behandelt werden, Informationen über eine Menge von Daten, die von jeder der drahtlosen Vorrichtungen gesendet und empfangen werden, Informationen über eine Sendeleistung jeder der drahtlosen Vorrichtungen und Informationen über eine Prioritätsfolge jeder der drahtlosen Vorrichtungen aufweisen.

3. Verfahren nach Anspruch 1, wobei der Bestimmungsschritt ausgeführt wird, wenn die Summe der Anzahl von drahtlosen Vorrichtungen, die gegenwärtig das drahtlose Netzwerk bilden, und einer Anzahl von drahtlosen Vorrichtungen, die sich an das drahtlose Netzwerk anzuschließen wünschen, die Anzahl von drahtlosen Vorrichtungen überschreitet, die das drahtlose Netzwerk akzeptieren kann.

4. Vorrichtung nach Anspruch 3, wobei, wenn eine drahtlose Vorrichtung erscheint, die sich an das drahtlose Netzwerk anzuschließen wünscht, die Summe die Anzahl von drahtlosen Vorrichtungen überschreitet, die das drahtlose Netzwerk akzeptieren kann.

5. Verfahren nach Anspruch 1, wobei der Bestimmungsschritt in jedem Fall ausgeführt wird, wenn ein Kanal, der vom drahtlosen Netzwerk verwendet wird, in einem schlechten Zustand ist, oder wenn eine Last einer drahtlosen Vorrichtung, die zum Verwalten des drahtlosen Netzwerks ausgelegt ist, zunimmt.

6. Verfahren nach Anspruch 1, wobei die Bestimmungs- und Sendeschritte von einer drahtlosen Vorrichtung ausgeführt werden, die zum Verwalten des drahtlosen Netzwerks ausgelegt ist.

7. Verfahren nach Anspruch 1, wobei das drahtlose Netzwerk entweder ein drahtloses Netzwerk für den persönlichen Bereich, WPAN, oder ein drahtloses lokales Netzwerk, WLAN, ist.

8. Verfahren nach Anspruch 1, ferner aufweisend:
Senden einer Verbindungszulassungsnachricht an die zweite drahtlose Vorrichtung, welche Zulassung zur Verbindung mit dem drahtlosen Netzwerk anfordert; und
Senden von Informationen über das drahtlose Netzwerk, die sich infolge des Trennens der ersten drahtlosen Vorrichtung, die vom drahtlosen Netzwerk getrennt werden soll, und des Verbindens der zweiten drahtlosen Vorrichtung, welche Zulassung zur Verbindung mit dem drahtlosen Netzwerk anfordert, geändert haben, an die drahtlosen Vorrichtungen, die das drahtlose Netzwerk bilden.

9. Drahtlose Vorrichtung, aufweisend:
eine Kommunikationsschnittstelle (410), die so ausgelegt ist, dass sie kommunizierbar mit drahtlosen Vorrichtungen gekoppelt ist, die ein drahtloses Netz bilden; und
einen Prozessor (420), der so ausgelegt ist, dass er basierend auf einer Reaktion auf eine Bestimmung, dass das drahtlose Netzwerk nicht über die Fähigkeit zum Akzeptieren einer zweiten drahtlosen Vorrichtung mit angeforderter Verbindung zum drahtlosen Netzwerk verfügt, eine erste drahtlose Vorrichtung bestimmt, die vom drahtlosen Netzwerk getrennt werden soll, wobei der Prozessor (420) so ausgelegt ist, dass er die erste drahtlose Vorrichtung durch Senden von Nachrichten zur Anforderung von Vorrichtungsinformationen an die drahtlosen Vorrichtungen, die das drahtlose Netzwerk bilden, bestimmt und basierend auf den Vorrichtungsinformationsnachrichten empfangen von den drahtlosen Vorrichtungen, die das drahtlose Netzwerk bilden, die erste drahtlose Vorrichtung auswählt, die sich an ein anderes drahtloses Netzwerk anschließen kann; wobei
der Prozessor (420) so ausgelegt ist, dass er durch die Kommunikationsschnittstelle eine Trennungsanforderungsnachricht an die erste drahtlose Vorrichtung sendet, die vom drahtlosen Netzwerk getrennt werden soll, und so ausgelegt ist, dass er nach dem Trennen der ersten drahtlosen Vorrichtung die Verbindungsanforderung der zweiten drahtlosen Vorrichtung zulässt und die zweite drahtlose Vorrichtung mit dem drahtlosen Netzwerk verbindet.

## Revendications

1. Procédé pour gérer un réseau sans fil comprenant les étapes suivantes :
parmi les dispositifs sans fil configurant le réseau sans fil, déterminer un premier dispositif sans fil à dissocier du réseau sans fil sur la base d'une réponse à une détermination que le réseau sans fil ne dispose pas de la capacité d'accepter un second dispositif sans fil ayant demandé une association audit réseau sans fil,
où déterminer le premier dispositif sans fil comprend en outre de transmettre des messages de demande d'informations de dispositifs aux dispositifs sans fil configurant ledit réseau sans fil ;
sur la base des messages d'informations de dispositifs reçus des dispositifs sans fil configurant ledit réseau sans fil, sélectionner le premier dispositif sans fil qui peut rejoindre un autre réseau sans fil ;
transmettre un message de demande de dissociation au premier dispositif sans fil qui doit être dissocié du réseau sans fil ; et
après dissociation du premier dispositif sans fil, la demande d'association du second dispositif sans fil est approuvée et le second dispositif sans fil est associé au réseau sans fil.

2. Procédé tel que revendiqué dans la revendication 1, dans lequel les messages d'informations de dispositifs comprennent des informations sur un type de données traitées par chacun des dispositifs sans fil, des informations sur une quantité de données reçues et émises par chacun des dispositifs sans fil, des informations sur une puissance de transmission de chacun des dispositifs sans fil, et des informations sur un ordre de priorité de chacun des dispositifs sans fil.

3. Procédé tel que revendiqué dans la revendication 1, dans lequel l'étape de détermination est exécutée si la somme du nombre de dispositifs sans fil configurant actuellement le réseau sans fil et d'un nombre de dispositifs sans fil qui souhaitent rejoindre le dispositif sans fil dépasse le nombre de dispositifs sans fil que le réseau sans fil peut accepter.

4. Procédé tel que revendiqué dans la revendication 3, dans lequel si un dispositif sans fil qui souhaite rejoindre le réseau sans fil apparaît, la somme dépasse le nombre de dispositifs sans fil que le réseau sans fil peut accepter.

5. Procédé tel que revendiqué dans la revendication 1, dans lequel l'étape de détermination est exécutée dans l'un ou l'autre cas suivants, où un canal utilisé par le réseau sans fil est en mauvais état ou, où une charge d'un dispositif sans fil conçu pour gérer le réseau sans fil augmente.

6. Procédé tel que revendiqué dans la revendication 1, dans lequel les étapes de détermination et de transmission sont exécutées par un dispositif sans fil conçu pour gérer le réseau sans fil.

7. Procédé tel que revendiqué dans la revendication 1, dans lequel le réseau sans fil est soit un réseau personnel sans fil, WPAN, soit un réseau local sans fil, WLAN.

8. Procédé tel que revendiqué dans la revendication 1, comprenant en outre les étapes suivantes :
transmettre un message d'approbation d'association au second dispositif sans fil qui demande une approbation pour une association au réseau sans fil ; et
transmettre des informations sur le réseau sans fil qui a été transformé suite à la dissociation du premier dispositif sans fil qui doit être dissocié du réseau sans fil et à l'association du second dispositif sans fil qui demande une approbation pour une association au réseau sans fil aux dispositifs sans fil configurant le réseau sans fil.

9. Dispositif sans fil comprenant :
une interface de communication (410) qui est conçue pour être couplée de manière communicante aux dispositifs sans fil configurant un réseau sans fil ; et
un processeur (420) qui est utilisable pour déterminer un premier dispositif sans fil à dissocier du réseau sans fil sur la base d'une réponse à une détermination que le réseau sans fil ne dispose pas de la capacité d'accepter un second dispositif sans fil ayant demandé une association audit réseau sans fil, où le processeur (420) est utilisable pour déterminer le premier dispositif sans fil en transmettant des messages de demande d'informations de dispositifs aux dispositifs sans fil configurant ledit réseau sans fil, et, sur la base des messages d'informations de dispositifs reçus des dispositifs sans fil configurant ledit réseau sans fil, pour sélectionner le premier dispositif sans fil qui peut rejoindre un autre réseau sans fil ; où
le processeur (420) est utilisable pour transmettre un message de demande de dissociation au premier dispositif sans fil qui doit être dissocié du réseau sans fil par l'intermédiaire de l'interface de communication et, après dissociation du premier dispositif sans fil, est utilisable pour approuver la demande d'association du second dispositif sans fil et pour associer le second dispositif sans fil au réseau sans fil.
